# EUROPEAN PATENT APPLICATION

(11) **EP 0 919 118 A1**
(43) Date of publication of application: **02.06.1999**
(21) Application number: 98204057.8
(22) Date of filing: 01.12.1998
(51) Int. Cl.: A01G 27/04

(54) **Water supply for flowerpots, plant boxes and the like**

(30) Priority: 01.12.1997 NL 1007659
(71) Applicant: Wijtenhorst, Hendrik, 9606 PJ Kropswolde (NL)
(72) Inventor: Wijtenhorst, Hendrik, 9606 PJ Kropswolde (NL)
(74) Representative: Ottevangers, Sietse Ulbe

(57) **Abstract**

A water supply (2) suitable for placement in a flowerpot (1), plant box or the like, comprises a water reservoir (3) closed all round and having a flexible filling pipe (4) and one or more passages (5) for a capillary (6). In the water reservoir (3), a water level sensor (7) is present, the water level (8) signalling taking place via a line extending through the flexible filling pipe (4) and indication means (10) present at the end of the filling pipe (4). The flexible filling pipe (4) may also be changeable in its longitudinal direction.

## Description

The present invention relates to a water supply suitable for placement in a flowerpot, plant box or the like and formed by a water reservoir which is closed all round, having a filling pipe and one or more passages for a capillary. In the water in the water reservoir, all kinds of nutrients may be dissolved or added thereto as finely divided particles. Accordingly, the term "water supply" also comprises a facility for water to be fed to plants and having nutrients or plant growth-promoting agents added thereto.

Such water supply is known from French patent application FR-A-2.646.750 and is intended for being buried in a flowerpot, a plant box or the like. In this French patent application, the water supply has a modular construction and in the case of relatively large pots or boxes, a plurality of modules, intercoupled and together forming a water reservoir, can be placed therein. Through a passage provided in the top wall of the reservoir, a capillary can be passed for feeding, when the water supply is disposed in a pot or box and soil is placed on top, water from the reservoir to this soil. To enable replenishing the water reservoir, it comprises a fixed filling pipe which extends through the soil placed on top of the reservoir. Although a plurality of modules can be arranged on top of and/or next to each other, the water supply in the French patent application is still not suitable for all types of pots or boxes of various dimensions, in particular of arbitrary height, or for being used for repotting plants in various stages of growth, in particular plants whose root system has developed with substantial variation.

The object of the invention is to arrange the water supply so that it can readily be adapted to all kinds of models and dimensions of pots and boxes.

To that end, in accordance with the invention, the water supply as described in the opening paragraph is characterized in that the filling pipe is flexible. As a result, the water supply is a self-contained unit independent of the flowerpots or plant boxes in which it can be placed, while the adaptability to all kinds of models and dimensions of pots or boxes is considerably increased. Indeed, the filling pipe can in each case be arranged in such a manner that only a small portion of its top end is sited above the level of the soil on top of the water reservoir. As long as the water reservoir is not yet empty, the filling pipe need not be connected to any water supply system.

Although British patent application GB-A-2.095.083 teaches a flexible filling pipe for a water supply for flowerpots, plant boxes and the like, the water reservoir is here formed by the lower portion of an outside box, above which a flowerpot or plant box is provided with a narrow fit, while the flexible filling pipe is connected to a length of pipe passed through the outside box. Moreover, the filling pipe is permanently connected to a water supply system, while the reservoir is automatically replenished when running empty.

In a faborable embodiment, a water level sensor is present in the water reservoir, and a water level signalling takes place via a gauge line extending through the flexible filling pipe and indication means arranged at the end of the flexible filling pipe. It can thus be indicated when the water reservoir is to be replenished. Moreover, the space within the filling pipe is utilized in a favorable manner for passing through the gauge line for the water level. Although one may use electronic sensors for, for instance, indicating a lowermost and an uppermost position of the water level in the water reservoir, and a corresponding signalling via the line which is then designed as an electric conductor extending through the flexible filling pipe, and indication means for indicating the electronically determined water level, the water level sensor can in a simple embodiment be formed by a float element, while the water level signalling is obtained by the extent to which the gauge line connected to this float element and extending through the flexible filling pipe, projects from this filling pipe. The indication means can then be formed by the end of the gauge line itself or by an indicator element, provided with markings, at the end of the gauge line extending through the filling pipe.

The filling pipe is in particular manufactured from a pliable plastic. This readily enables it, possibly together with the line extending through the filling pipe, to be sheared or cut off to the desired length, if this should be necessary.

In accordance with a further facet of the invention, the flexible filling pipe is also changeable in its longitudinal direction. Through this measure, the adaptability to all kinds of models and dimensions of pots and boxes is further increased. In particular, the filling pipe can be formed by an accordion-shaped or bellows-shaped tube or can be composed of telescopic parts.

The invention further relates to a container body, such as a flowerpot, a plant box or the like, wherein, at the bottom thereof, a water supply according to any one of the preceding claims is disposed, on top of which soil can be provided for raising plants.

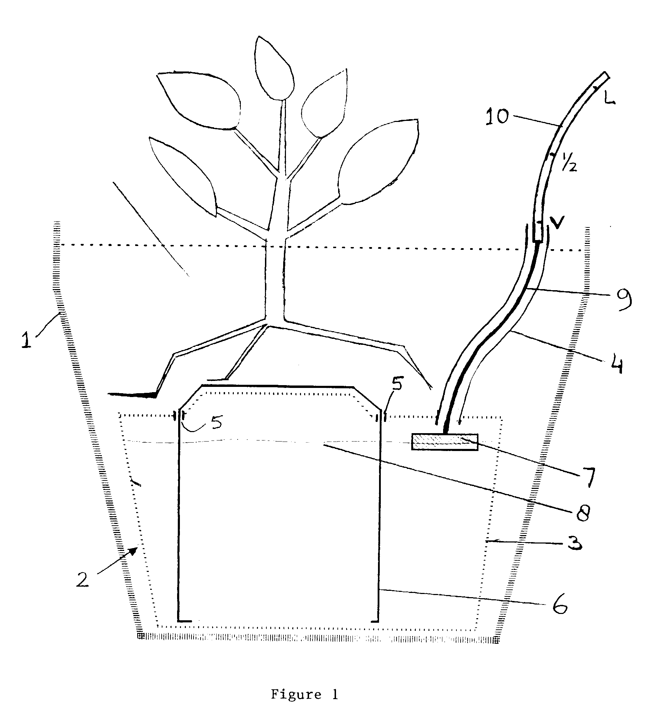

The invention will presently be specified with reference to the accompanying Figure, showing an exemplary embodiment of the water supply according to the invention, placed in a flowerpot.

The Figure shows a flowerpot 1 wherein, at the bottom thereof, a water supply 2 according to the invention is disposed. Above this water supply, soil can be placed in the flowerpot, while into the soil a plant can be inserted. It is also possible to insert seed to be germinated or a plant to be raised. The water supply comprises a water reservoir 3 closed all round, having a filling pipe 4 and one or more passages 5 for a capillary 6. In the embodiment shown, two passages 5 are shown through which the capillary 6 in the form of an inverted U is passed. By means of this capillary 6, water is sucked from the water reservoir 3 and passed into the soil provided above the water reservoir. In the water reservoir 3, a level sensor in the form of a float element 7 is present, floating on the water present in the reservoir 3. The height position of the float element 7 in the reservoir 3 determines the water level 8 in the reservoir. The reservoir 3 is filled via the filling pipe 4, while the water level signalling is effected by means of a gauge line 9 connected to the float element 7 and extending through the filling pipe 4. Arranged at the end of this gauge line 9 is an indicator element 10 provided with markings. Both the filling pipe 4 and the gauge line 9 and the indicator element 10 are of flexible design and are in the present exemplary embodiment manufactured from a pliable plastic. The gauge line 9 with the indicator element 10 can be moved through the filling pipe 4. When the reservoir 3 is virtually empty, the float element 7 is in its lowermost position, i.e. on or virtually on the bottom of the reservoir, while the gauge line 9 and the indicator element 10 have moved down through the filling pipe 4 so far that the marking L, indicating that the reservoir is empty, is at the level of the upper edge of the filling pipe 4. When, as indicated in the Figure, the reservoir is virtually full, the float element is in its uppermost position, i.e. against or virtually against the top wall of the reservoir, while the gauge line 9 and the indicator element 10 have been moved up through the filling pipe 4 so far that the marking V, indicating that the reservoir is filled, is at the level of the upper edge of the filling pipe 4. Intermediate positions of the water level in the reservoir are indicated by intermediate markings on the indicator element. The filling pipe 4 is flexible and preferably designed from plastic; this enables it to be readily adapted to all kinds of shapes and measures of flowerpots, plant boxes and the like. In particular, the filling pipe can always be cut off to the desired length. However, for any length set, the indicator element 10 should be arranged in such a manner, for instance slid over the gauge line 9 so far that when the float element 7 is in its uppermost position, the marking V (full) virtually coincides with the upper edge of the filling pipe 4.

In a simpler embodiment, the indication means are formed by the end of the gauge line 9 itself. In that case, markings on and adjacent the end thereof are not even necessary. The length of the gauge line can be such that if the water reservoir is empty or almost empty, the gauge line 9 no longer projects from the filling pipe. Only an indication for the empty or almost empty condition of the water reservoir can then be obtained. As long as the gauge line 9 projects from the filling pipe 4, the water reservoir is not yet empty.

The invention is by no means limited to the embodiment here described with reference to the Figure, but comprises various modifications thereto, of course in so far as these fall within the following claims. For instance, the flexible filling pipe may be changeable in its longitudinal direction, and may in particular be of bellows-shaped or accordion-shaped design. In that case, the filling pipe need not be cut off, but can, through a change of length, readily be adjusted to the height of the flowerpot or plant box. For any change of length set, the indicator element 10 should again be slid over the line 9 so far, or the line 9 should have a length such that when the float element is in its uppermost position, the marking V (full) again coincides with the upper edge of the filling pipe. Instead of a bellows-shaped or accordion-shaped filling pipe, it may also be composed of telescopic parts. Also, in a relatively large plant box, a plurality of water reservoirs can be arranged and interconnected to form one large water reservoir.

## Claims

1. A water supply suitable for placement in a flowerpot, plant box or the like and formed by a water reservoir closed all round and having a filling pipe and one or more passages for a capillary, **characterized in that** the filling pipe is flexible.

2. A water supply according to claim 1, characterized in that in the water reservoir, a water level sensor is present and a water level signalling takes place via a gauge line extending through the flexible filling pipe and indication means arranged at the end of the flexible filling pipe.

3. A water supply according to claim 2, characterized in that the water level sensor is formed by a float element, while the water level signalling is obtained by the extent to which the gauge line connected to said float element and extending through the flexible filling pipe projects from said filling pipe.

4. A water supply according to claim 3, characterized in that the indication means are formed by the end of the gauge line.

5. A water supply according to claim 3, characterized in that the indication means are formed by an indicator element at the end of the gauge line extending through the filling pipe, said indicator element being provided with markings.

6. A water supply according to any one of the preceding claims, characterized in that the filling pipe is manufactured from a pliable plastic.

7. A water supply according to any one of the preceding claims, characterized in that the flexible filling pipe is also changeable in its longitudinal direction.

8. A water supply according to claim 7, characterized in that the filling pipe is formed by an accordion-shaped or bellows-shaped tube.

9. A water supply according to claim 7, characterized in that the filling pipe is composed of telescopic parts.

10. A container body, such as a flowerpot, a plant box or the like, wherein, at the bottom thereof, a water supply according to any one of the preceding claims is disposed, on top of which soil can be provided for putting plants therein.
